# EUROPEAN PATENT SPECIFICATION

(11) **EP 3 339 762 B1**
(45) Date of publication and mention of the grant of the patent: **18.09.2019**
(21) Application number: 16837066.6
(22) Date of filing: 10.08.2016
(51) Int. Cl.: F25B 47/02, F24F 11/42, F24F 13/24, F24F 11/74

(54) **AIR CONDITIONER**
KLIMAANLAGE
CLIMATISEUR

(30) Priority: 18.08.2015 JP 2015161190
(43) Date of publication of application: 27.06.2018
(73) Proprietor: Daikin Industries, Ltd., Osaka 530-8323 (JP)
(72) Inventor: NAKATA, Takahiro, Osaka 530-8323 (JP); YONEDA, Junya, Osaka 530-8323 (JP)
(74) Representative: Hoffmann Eitle
(86) International application number: PCT/JP2016/073657
(87) International publication number: WO 2017/030076

(56) References cited:
- JP-A- S6 315 023
- JP-A- S6 315 023
- JP-A- 2006 046 702
- JP-A- 2006 046 702
- JP-A- 2009 092 353
- JP-A- 2009 092 353
- JP-U- H0 495 245
- JP-U- S6 343 029
- JP-U- S6 343 029

## Description

### TECHNICAL FIELD

The present invention relates to an air conditioner.

### BACKGROUND ART

During a heating operation of an air conditioner, in order for the air conditioner to shift to a defrosting operation, the air conditioner performs an operation of substantially reducing differential pressure to reduce impulse noise when a four-way valve switches from a heating cycle to a cooling cycle, and then shifts to the defrosting operation by switching the four-way valve.

For example, in a control device for a refrigeration cycle disclosed in JP-ANo. H10-253205, compressor operation frequency changing means reduces operation frequency to operate the compressor at low speed, to thereby reduce the difference between low pressure and high pressure in the refrigeration cycle, and switch a four-way valve when the amount of time taken to operate the compressor at low speed has reached a predetermined period of time. Further prior art can be found in JP S63 15023 A.

### SUMMARY OF THE INVENTION

### <Technical Problem>

However, in the above-mentioned control, the compressor is operated at the low-speed by reducing the operating frequency in order to reduce the difference between the high pressure and the low pressure in the refrigeration cycle, and hence heating capacity during that low-speed operation decreases.

An object of the present invention is to provide an air conditioner that is capable of dealing with impact noise that occurs when a four-way valve is switched, and reducing heating capacity degradation before the air conditioner shifts to a defrosting operation.

### <Solution to Problem>

The present invention is defined by the appended independent claim 1. Preferred optional features are recited in the dependent claims.

An air conditioner according to a first aspect of the present invention includes the features of claim 1.

In the air conditioner according to this aspect, although a user is used to hearing the sound of the indoor fan that usually occurs while the indoor unit is running, the sound of impact that occurs when the four-way valve performs the switching action is shocking and strange to the user. To counteract this, the impulse noise that occurs when the four-way valve performs the switching action is drowned out by the noise of the indoor fan if the indoor fan runs when the four-way valve performs the switching action. Therefore, the user can be prevented from feeling uncomfortable due to the strange noise that occurs. In addition, there is no need to reduce the operating frequency of the compressor before the air conditioner shifts to the defrosting operation, and so a reduction in heating operation capability can be prevented.

Furthermore, in the air conditioner according to this aspect, because the differential pressure in the refrigerant circuit decreases due to the pressure equalization control, the impulse noise that occurs when the four-way valve performs the switching action is reduced. In addition, the noise of the indoor fan masks the impulse noise to drown out the impulse noise, which can prevent the user from feeling uncomfortable due to a strange noise.

An air conditioner according to a second aspect of the present invention is the air conditioner according to the first aspect of the present invention, in which the controller performs the first control while continuing to run the compressor.

In the air conditioner according to this aspect, there is no need to perform pressure equalization control by stopping the compressor and reducing the differential pressure in the refrigerant circuit before the defrosting operation, which saves pressure equalization time. Therefore, the heating operation operating ratio (= net heating operation time/<net heating operation time + defrosting operation time>) increases by the amount of time saved.

An air conditioner according to a third aspect of the present invention is the air conditioner according to the first or the second aspect of the present invention, in which the controller continues to run the indoor fan for a period spanning from before the four-way valve performs the switching action to until the switching action ends.

In the air conditioner according to this aspect, because the indoor fan continues to run before and after the four-way valve performs the switching action, the impulse noise can reliably be masked by the noise of the indoor fan. As a result, the impulse noise that occurs when the four-way valve performs the switching action can be drowned out, and the user can be prevented from feeling uncomfortable due to a strange noise.

An air conditioner according to a fourth aspect of the present invention is the air conditioner according to the first aspect of the present invention, in which the controller performs the first control without stopping the compressor when the speed of the indoor fan before the four-way valve performs the switching action is equal to or more than a predetermined speed. In addition, the controller performs the pressure equalization control of stopping the compressor and the indoor fan, and reducing the differential pressure in the refrigerant circuit when the speed of the indoor fan before the four-way valve performs the switching action is less than the predetermined speed.

In the air conditioner according to this aspect, as a method of preventing the user from noticing the impulse noise the occurs when the four-way valve performs the switching action, the first control and the pressure equalization control can be selectively used depending on the speed of the indoor fan before the switching action is performed. Therefore, compared to a conventional method of only selecting the pressure equalization control, there are more chances to increase the heating operation operating ratio.

An air conditioner according to a fifth aspect of the present invention is the air conditioner according to the second aspect of the present invention, in which the controller reduces the operating frequency of the compressor before the four-way valve performs the switching action.

In the air conditioner according to this aspect, the controller reduces the operating frequency of the compressor in advance when performing the first control while continuing to run the compressor, to thereby somewhat reduce the differential pressure in the refrigerant circuit. Therefore, the impulse noise that occurs when the four-way valve performs the switching action also reduces by the amount the differential pressure is reduced, and can be reliably drowned out by being masked by the noise of the indoor fan.

### <Advantageous Effects of Invention>

In the air conditioner according to the first aspect of the present invention, because the indoor fan runs when the four-way valve performs the switching action, the noise of the indoor fan drowns out the impulse noise that occurs when the four-way valve performs the switching action, and the user can be prevented from feeling uncomfortable due to a strange noise. In addition, because there is no need to reduce the operating frequency of the compressor before shifting to the defrosting operation, reduction of the heating operation capacity can be prevented.

Furthermore, in the air conditioner according to this aspect of the present invention, because the differential pressure in the refrigerant circuit reduces due to the pressure equalization control, the impulse noise the occurs when the four-way valve performs the switching action is reduced. In addition, the noise of the indoor fan masks the impulse noise to drown out the impulse noise, which prevents the user from feeling uncomfortable due to a strange noise.

In the air conditioner according to the second aspect of the present invention, there is no need to perform the pressure equalization control of stopping the compressor and reducing the differential pressure in the refrigerant circuit before the defrosting operation, which saves the time required to equalize pressure. Therefore, the heating operation operating ratio (= net heating operation time/<net heating operation time + defrosting operation time>) increases by the amount of time saved.

In the air conditioner according to the third aspect of the present invention, because the indoor fan continues to run before and after the four-way valve performs the switching action, the impulse noise can reliably be masked by the noise of the indoor fan. As a result, the impulse noise that occurs when the four-way valve performs the switching action can be drowned out, and the user can be prevented from feeling uncomfortable due to a strange noise.

In the air conditioner according to the fourth aspect of the present invention, as a method of preventing the user from noticing the impulse noise the occurs when the four-way valve performs the switching action, the first control and the pressure equalization control can be selectively used depending on the speed of the indoor fan before the switching action is performed. Therefore, compared to a conventional method of only selecting the pressure equalization control, there are more chances to increase the heating operation operating ratio.

In the air conditioner according to the fifth aspect of the present invention, the controller reduces the operating frequency of the compressor in advance when performing the first control while continuing to run the compressor, to thereby somewhat reduce the differential pressure in the refrigerant circuit. Therefore, the impulse noise that occurs when the four-way valve performs the switching action also reduces by the amount the differential pressure is reduced, and the impulse noise can be reliably drowned out when masked by the noise of the indoor fan.

### BRIEF DESCRIPTION OF THE DRAWINGS

FIG. 1 is a configuration diagram illustrating an air conditioner according to an embodiment of the present invention.
FIG. 2 is a perspective diagram illustrating an indoor unit.
FIG. 3 is a block diagram showing control of the air conditioner.
FIG. 4 is a perspective diagram illustrating a four-way valve.
FIG. 5 is a cross-sectional view illustrating the vicinity of a slide base and a slide valve of the four-way valve.
FIG. 6 is a flowchart showing shift to a defrosting operation that includes impulse noise masking control.
FIG. 7A is a time chart showing shift to the defrosting operation that includes the impulse noise masking control.
FIG. 7B is a time chart showing shift to a defrosting operation that does not include the impulse noise masking control.

### DESCRIPTION OF EMBODIMENTS

An embodiment of the present invention is described below with reference to the drawings. The embodiment described below is merely a specific example of the present invention and is not intended to limit the technical scope of the present invention.

### (1) Configuration of air conditioner 1

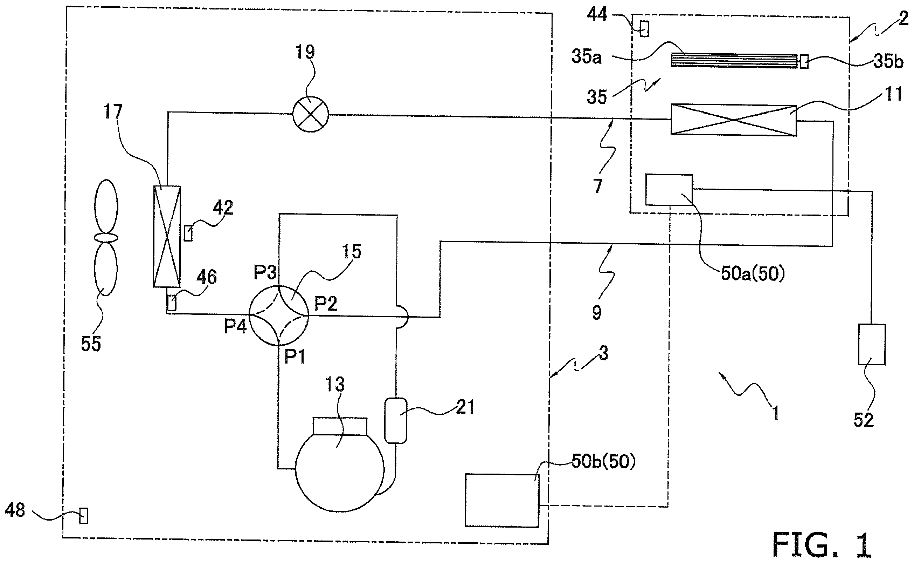

FIG. 1 is a configuration diagram of an air conditioner 1 according to the embodiment of the present invention. In FIG. 1, the air conditioner 1 is a refrigeration device that can perform a cooling operation and a heating operation, and includes an indoor unit 2, an outdoor unit 3, and a liquid refrigerant communication pipe 7 for connecting the outdoor unit 3 and the indoor unit 2 to one another, and gas refrigerant communication pipe 9. A single component refrigerant R32 is enclosed in a refrigerant circuit of the air conditioner 1.

### (1-1) Indoor unit 2

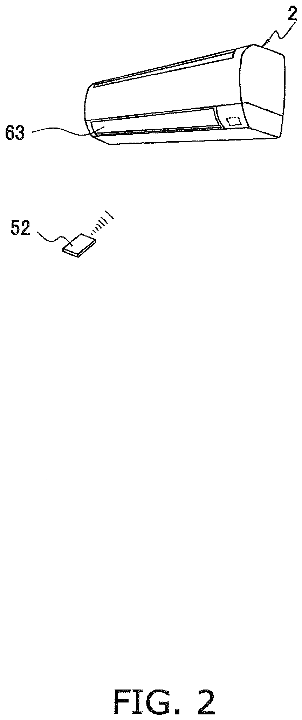

FIG. 2 is a perspective view of the indoor unit 2. In FIG. 1 and FIG. 2, the indoor unit 2 includes an indoor heat exchanger 11 and an indoor fan 35. In addition, the indoor unit 2 comes with a remote control unit (hereinafter referred to as "remote control 52"). The remote control 52 controls the air conditioner 1 based on operations by a user by sending/receiving signals to/from controllers built into the indoor unit 2 and the outdoor unit 3.

### (1-1-1) Indoor heat exchanger 11

The indoor heat exchanger 11 is a cross-finned tube heat exchanger including a heat transfer tube and a plurality of fins. The indoor heat exchanger 11 cools indoor air by functioning as a refrigerant evaporator during the cooling operation, and heats the indoor air by functioning as a refrigerant condenser during the heating operation.

The indoor heat exchanger 11 is not limited to the cross-finned tube heat exchanger, and may be another type of heat exchanger.

### (1-1-2) Indoor fan 35

The indoor fan 35 is a cross flow fan. The indoor fan 35 includes a fan 35a, and an indoor fan motor unit 35b configured to rotate the fan 35a. The fan 35a is made of a resin material such as AS resin, and is formed into a long, thin tubular shape. The fan 35a is disposed such that a long axis of the fan 35a is horizontal.

The rotation of the indoor fan 35 causes the indoor air to be sucked into the indoor unit 2 from a front surface side of the indoor unit 2, to then be heat exchanged with refrigerant in the indoor heat exchanger 11, and finally supplied as supplied air to the room. In addition, the indoor fan 35 can alter the amount of air supplied to the indoor heat exchanger 11 within a predetermined range.

### (1-2) Outdoor unit 3

In FIG. 1, the outdoor unit 3 mainly includes a compressor 13, a four-way valve 15, an outdoor heat exchanger 17, an expansion valve 19, and an accumulator 21. The outdoor unit 3 further includes an outdoor fan 55.

### (1-2-1) Compressor 13

The compressor 13 is a variable capacity compressor. An inverter controls the speed of the compressor 13. In the present embodiment, only one compressor 13 is provided, but the present embodiment is not limited to this configuration, and may include two or more compressors connected to each other in parallel to accommodate the number of connected indoor units 2, for example.

### (1-2-2) Four-way valve 15

The four-way valve 15 is a valve that switches the direction of flow of the refrigerant. During the cooling operation, the four-way valve 15 connects a discharge side of the compressor 13 and a gas side of the outdoor heat exchanger 17 to one another, and connects an intake side of the compressor 13 (more specifically, the accumulator 21) and a side of the gas refrigerant communication pipe 9 to one another (cooling operation state: refer to the solid line that connects P1 and P4 of the four-way valve 15, and the solid line that connects P2 and P3 of the four-way valve 15 illustrated in FIG. 1) As a result, the outdoor heat exchanger 17 functions as a refrigerant condenser, and the indoor heat exchanger 11 functions as a refrigerant evaporator.

During the heating operation, the four-way valve 15 connects the discharge side of the compressor 13 and a side of the gas refrigerant communication pipe 9 to one another, and connects the intake side of the compressor 13 and the gas side of the outdoor heat exchanger 17 to one another (heating operation state: refer to the broken line that connects P1 and P2 of the four-way valve 15, and the broken line that connects P3 and P4 of the four-way valve 15 illustrated in FIG. 1). As a result, the indoor heat exchanger 11 functions as a refrigerant condenser, and the outdoor heat exchanger 17 functions as a refrigerant evaporator.

### (1-2-3) Outdoor heat exchanger 17

The outdoor heat exchanger 17 is a cross-finned tube heat exchanger. The outdoor heat exchanger 17 functions as a refrigerant condenser during the cooling operation, and a refrigerant evaporator during the heating operation. The gas side of the outdoor heat exchanger 17 is connected to the four-way valve 15, and a liquid side of the outdoor heat exchanger 17 is connected to the expansion valve 19.

### (1-2-4) Expansion valve 19

The expansion valve 19 adjusts the pressure and flow rate and the like of the refrigerant that flows in the refrigerant circuit. The expansion valve 19 is disposed on a downstream side of the outdoor heat exchanger 17 in the direction the refrigerant flows in the refrigerant circuit during the cooling operation.

### (1-2-5) Outdoor fan 55

The outdoor fan 55 sucks in outdoor air, and sends that air to the outdoor heat exchanger 17 to cause the air to exchange heat with refrigerant. The outdoor fan 55 can change the flow rate of the air that is sent to the outdoor heat exchanger 17. The outdoor fan 55 is, for example, a propeller fan, and is driven by a motor such as a DC fan motor.

### (1-3) Controller 50

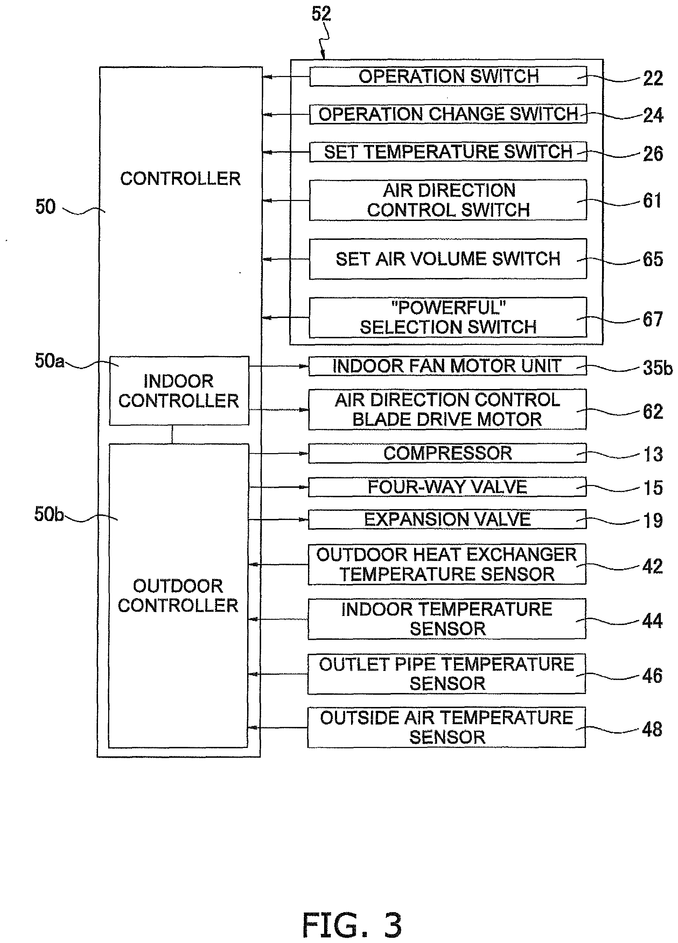

FIG. 3 is a block diagram showing control of the air conditioner 1. In FIG. 3, the controller 50 controls the operating frequency of the compressor 13, the switching action of the four-way valve 15, the opening degree of the expansion valve 19, the rotation of the indoor fan motor unit 35b, and the rotation of an air direction adjustment blade drive motor 62 on the basis of an instruction signal transmitted from the remote control 52.

As illustrated in FIG. 1, the controller 50 includes an indoor controller 50a that is built into the indoor unit 2, and an outdoor controller 50b that is built into the outdoor unit 3. Infrared signals are transmitted/received to/from the indoor controller 50a and the remote controller 52. Signals are wiredly transmitted/received between the indoor controller 50a and the outdoor controller 50b.

The remote control 52 is provided with an operation switch 22, an operation change switch 24, a set temperature switch 26, an air direction control switch 61, and a set air volume switch 65.

Each time the operation switch 22 is operated, the air conditioner 1 alternately switches between operating and stopping. Each operation of the operation change switch 24 switches the operation of the air conditioner 1 in the order of automatic→cooling→ dehumidification→heating. The set temperature switch 26 has an "up" button and a "down" button. The set temperature increases each time the "up" button is pressed, and decreases each time the "down" button is pressed.

In addition, every operation of the air direction control switch 61 causes the controller 50 (indoor controller 50a) to control the air direction control blade drive motor 62, and alternately switch an air direction control blade 63 (see FIG. 2) between vertical oscillation and standstill at a desired position.

In addition, the user can choose either one of a fixed air volume mode or an automatic air volume mode by operating the set air volume switch 65. When the user has chosen the fixed air volume mode, the user can further choose between "weak," "medium," or "strong" air flow. In contrast, when the user has chosen the automatic air volume mode, the air flow rate is automatically chosen in accordance with load.

In this embodiment, the remote control 52 is further provided with a "powerful" selection switch 67, which is separate to the set air volume switch 65, for selecting "powerful" air flow, which is stronger than the "strong" air flow that can be selected during the fixed air volume mode.

### (1-4) Various sensors

The air conditioner 1 is provided with an outdoor heat exchanger temperature sensor 42, an indoor temperature sensor 44, an outlet pipe temperature sensor 46, and an outside air temperature sensor 48. All of these sensors are composed of thermistors. The outdoor heat exchanger temperature sensor 42 is mounted to the outdoor heat exchanger 17, and is configured to detect the temperature of refrigerant that flows through a predetermined area of the outdoor heat exchanger 17. The indoor temperature sensor 44 is mounted to an intake port of the indoor unit 2, and is configured to detect the temperature of the indoor air. The outlet pipe temperature sensor 46 is mounted to a refrigerant outlet pipe of the outdoor heat exchanger 17, which functions as an evaporator during the heating operation, and is configured to detect the temperature of the refrigerant outlet pipe. The outside air temperature sensor 48 is configured to detect the temperature around the outdoor unit 3. The controller 50 controls the operation of the air conditioner 1 on the basis of values measured by these temperature sensors.

### (2) Operation of air conditioner 1

In the air conditioner 1, the four-way valve 15 makes it possible to switch the cycle of refrigerant to either one of a cooling operation cycle or a heating operation cycle.

### (2-1) Cooling operation

In the cooling operation, the four-way valve 15 is set to a first state (solid line in FIG. 1). In this state, the controller 50 runs the compressor 13 such that the outdoor heat exchanger 17 acts as a condenser, and the indoor heat exchanger 11 acts as an evaporator and a vapor-compression refrigeration cycle is performed .

High-pressure refrigerant that has been discharged from the compressor 13 is condensed through heat exchange with outside air by the outdoor heat exchanger 17. The refrigerant then leaves the outdoor heat exchanger 17, and is reduced in pressure when passing through the expansion valve 19, to thereby be evaporated through heat exchange with inside air by the indoor heat exchanger 11. At this time, the air is cooled by the indoor heat exchanger 11, and that cooled air is blown out into the room through an air outlet via the indoor fan 35. The refrigerant that has left the indoor heat exchanger 11 is sucked into the compressor 13 to be compressed by the compressor 13.

### (2-2) Heating operation

In the heating operation, the four-way valve 15 is set to a second state (broken line in FIG. 1). In this state, the controller 50 runs the compressor 13 such that the outdoor heat exchanger 17 acts as an evaporator, and the indoor heat exchanger 11 acts as a condenser and the vapor-compression refrigeration cycle is performed..

High-pressure refrigerant that has been discharged from the compressor 13 is condensed through heat exchange with indoor air by the indoor heat exchanger 11. At this time, the air is heated by the indoor heat exchanger 11, and that heated air is blown out into the room through an air outlet via the indoor fan 35. The condensed refrigerant is then reduced in pressure when passing through the expansion valve 19, and is evaporated through heat exchange with outside air by the outdoor heat exchanger 17. The refrigerant that has left the outdoor heat exchanger 17 is sucked into the compressor 13 to be compressed by the compressor 13.

### (3) Dealing with impulse noise during four-way valve switching action

### (3-1) Configuration of four-way valve 15

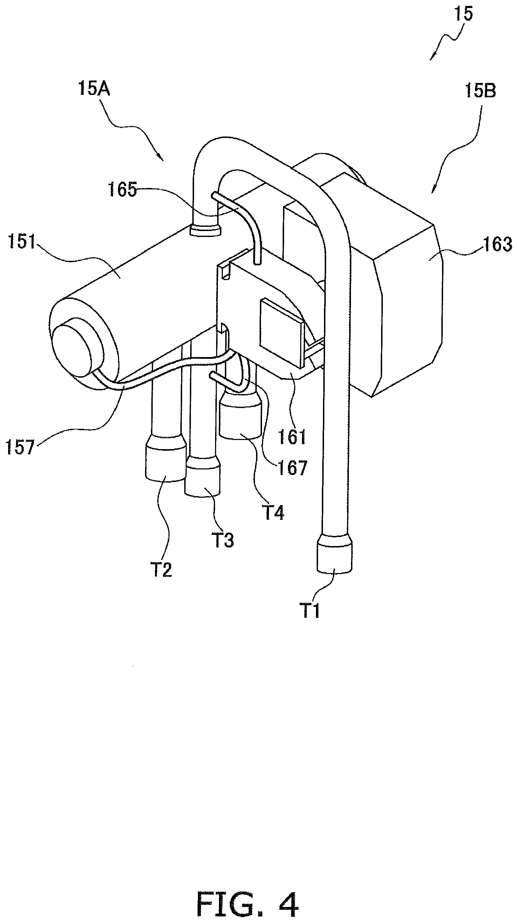

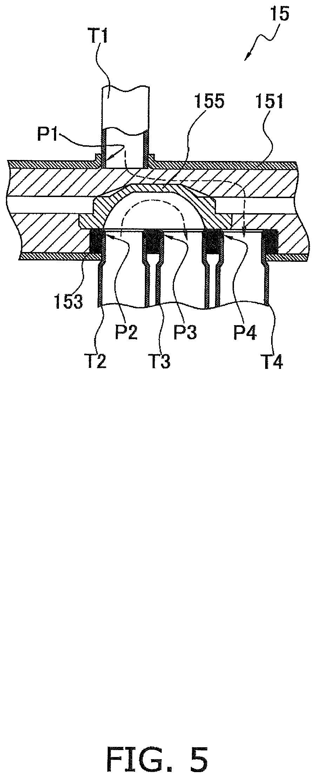

FIG. 4 is a perspective diagram illustrating the four-way valve 15. FIG. 5 is a cross-sectional view illustrating the vicinity of a slide base 153 and a slide valve 155 of the four-way valve 15.

In FIG. 4 and FIG. 5, the four-way valve 15 includes a switching valve portion 15A and a pilot-operated solenoid valve portion 15B. The switching valve portion 15A includes a cylinder 151, the slide base 153 (see FIG. 5), the slide valve 155 (see FIG. 5), and a pilot tube 157.

The slide base 153 is a base that is positioned at a central portion of the cylinder 151, and facilitates sliding of the slide valve 155. The slide base 153 is provided with ports P2, P3, and P4, which are arranged along the axial direction of the cylinder in the stated order.

The slide valve 155 is positioned inside the cylinder 151, and is freely slidable in the axial direction of the cylinder 151. In addition, the slide valve 155 has an upside-down U-shape.

In the cylinder 151, a port P1 is provided at a position that faces the port P2 of the slide base 153, and this port P1 is connected to one end of a high-pressure pipe T1.

The pilot tube 157 communicates both ends of the cylinder 151 to the pilot-operated solenoid valve portion 15B. Operating the pilot-operated solenoid valve portion 15B causes the pressure at one end of the cylinder 151 to become high, and the pressure at the other end of the cylinder 151 to become low. The pressure difference across the both ends causes the slide valve 155 to move on the slide base 153, which causes the ports that the ports P1, P2, P3, and P4 respectively communicate with to change.

Because the port P1 is connected to the high-pressure pipe T1 and thus communicates with a high-pressure side of the compressor 13, the port P1 is expressed as a high-pressure port P1. Because the port P3 is connected to a low-pressure pipe T3 and thus communicates with a low-pressure side of the compressor 13, the port P3 is expressed as a low-pressure port P3.

Because the ports P2 and P4 switch between high and low pressure during the cooling operation and the heating operation, the ports P2 and P4 are connected to high-pressure pipes T2 and T4 so as to be able to withstand high pressure.

The pilot-operated solenoid valve portion 15B includes a pilot valve unit 161 and a coil 163. The pilot valve unit 161 has a valve mechanism (not shown) built therein, the mechanism being able to move a movable valve with electromagnetic force in an open direction. The movable valve has been biased by spring force in a direction in which a valve opening closes. The coil 163 generates electromagnetic force for operating the valve mechanism in the open direction when electricity runs through the coil 163.

The pilot valve unit 161 incorporates the high/low pressure, which is to be applied to the cylinder 151, from piping on the high-pressure and low-pressure sides, respectively, via pilot pipes 165 and 167.

### (3-2) Action of four-way valve 15

In the four-way valve 15 with the above-described configuration, the slide valve 155 in the cylinder 151 is located on the left side of FIG. 5. While the high-pressure port P1 and the port P4 are in communication with each other, and the port P2 and the low-pressure port P3 are in communication with each other, and when electricity runs through the coil 163 of the pilot-operated solenoid valve portion 15B to excite the coil 163, the pressure difference across the ends of the cylinder 151 becomes such a difference that causes the slide valve 155 to move to the right, and hence the slide valve 155 moves to the right. As a result, the high-pressure port P1 and the port P2 communicate with each other, and the low-pressure port P3 and the port P4 communicate with each other.

In contrast, when the four-way valve 15 is switched in the opposite direction, and the electricity running through the coil 163 of the pilot-operated solenoid valve portion 15B is stopped to stop excitation of the coil 163, the pressure difference across the ends of the cylinder 151 becomes such a difference that causes the slide valve 155 to move to the left, and hence the slide valve 155 moves to the left. As a result, the high-pressure port P1 and the port P4 communicate with each other, and the port P2 and the low-pressure port P3 communicate with each other.

### (3-3) Impulse noise generating mechanism

For example, during the heating operation, because electricity does not run through the coil 163 of the pilot-operated solenoid valve portion 15B and hence the coil 163 is not excited, the slide valve 155 is located on the left side of FIG. 5, and the high-pressure port P1 and the port P4 are in communication with each other, and the port P2 and the low-pressure port P3 are in communication with each other. At this time, when there is an instruction to shift to the defrosting operation, the pressure difference across the both ends of the cylinder 151 becomes such a difference to cause the slide valve 155 to move to the right, and hence the slide valve 155 moves to the right. As a result, the high-pressure port P1 and the port P2 communicate with each other, and the low-pressure port P3 and the port P4 communicate with each other.

As a result, high pressure from the high-pressure port P1 suddenly acts on the port P2, which has had a low pressure up until that point, and this sudden impact causes the impulse noise to be generated.

### (3-4) Impulse noise masking control

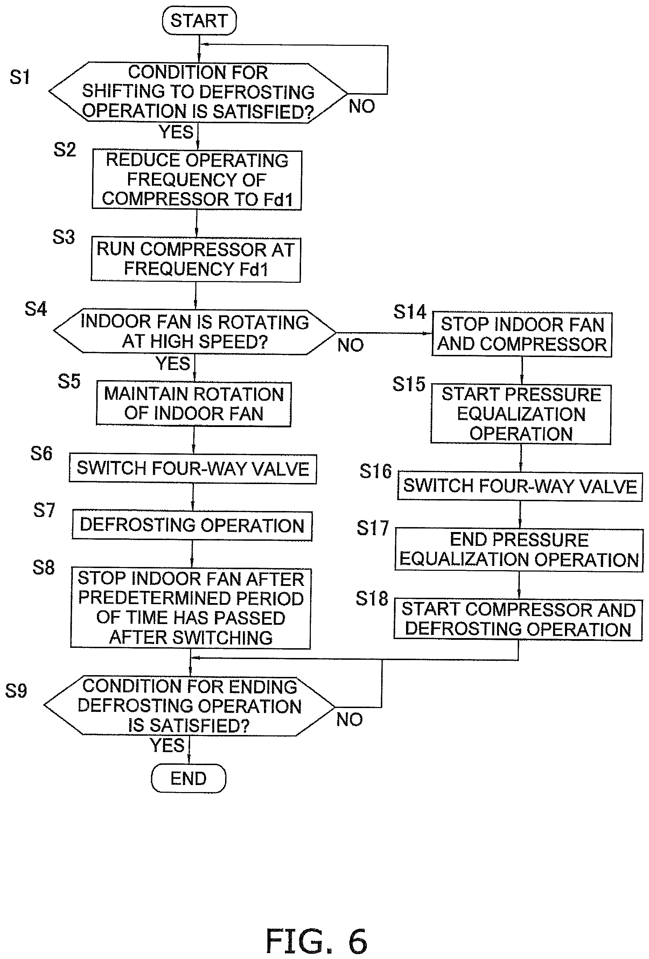

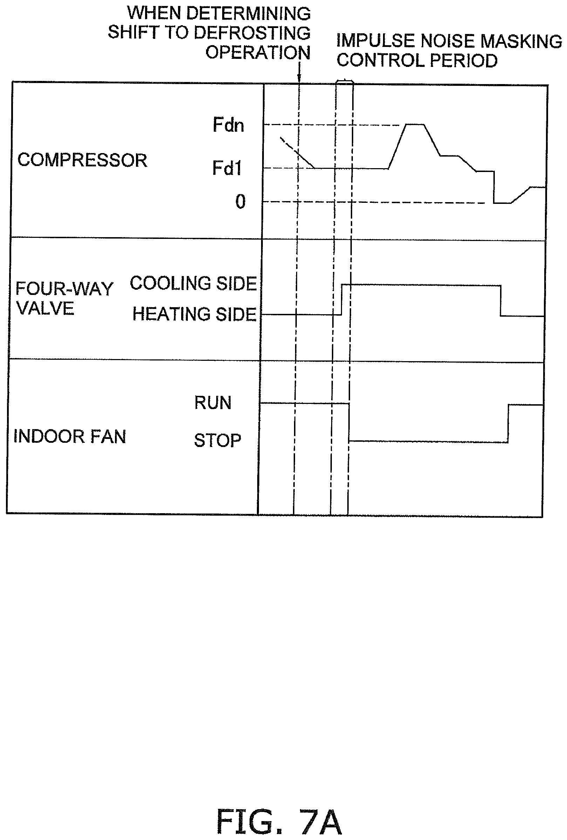

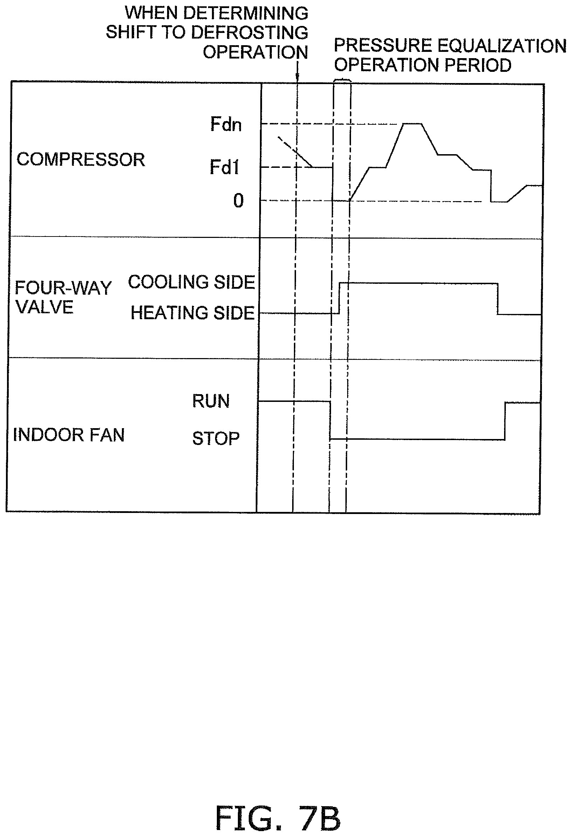

FIG. 6 is a flowchart showing shift to a defrosting operation that includes impulse noise masking control. FIG. 7A is a time chart showing shift to the defrosting operation that includes the impulse noise masking control. FIG. 7B is a time chart showing shift to a defrosting operation that does not include the impulse noise masking control. Note that the impulse noise masking control corresponds to "first control" cited in claim 1.

In FIGS. 6, 7A and 7B, in Step S1, the controller 50 determines whether or not a condition for causing the air conditioner 1 to shift to the defrosting operation is satisfied. When the controller 50 determines that the condition for causing the air conditioner 1 to shift to the defrosting operation is satisfied, the controller 50 proceeds to Step S2: otherwise, the controller 50 continues the process of determination.

Next, in Step S2, the controller 50 reduces the operating frequency of the compressor 13 to Fd1 (see FIG. 7A), and proceeds to Step S3.

Then, in Step S3, the controller 50 operates the compressor 13 for a predetermined period of time while maintaining the operating frequency at Fd1 (see FIG. 7A), and then proceeds to Step S4.

Next, in Step S4, the controller 50 determines whether or not the indoor fan 35 is rotating at a high speed. Here, "rotating at a high speed" is determined in accordance with air flow rate set by the remote control 52, and, for example, corresponds to a state in which the indoor fan 35 rotates while the air flow is "strong," assuming that the strength of air flow has been selected from the options "weak," "medium," and "strong." In addition, in this embodiment, it is also determined that the indoor fan 35 is rotating at a high speed when the air flow is set to "powerful" by the "powerful" selection switch 67, which is an option other than "strong." When the controller 50 determines that the indoor fan 35 is rotating at a high speed, the controller 50 proceeds to Step S5. When the controller 50 determines that the indoor fan 35 is not rotating at a high speed, the controller 50 proceeds to Step S14.

Next, in Step S5, the controller 50 maintains rotation of the indoor fan 35 (see FIG. 7A).

Then, in Step S6, the controller 50 switches the refrigerant cycle from the heating cycle to the cooling cycle by using the four-way valve 15 (see FIG. 7A). At this time, the impulse noise that is generated when the four-way valve 15 performs the switching action is transmitted to the indoor unit 2 through pipes. However, because the indoor fan 35 is rotating at a high speed, the impulse noise is drowned out by the noise of the indoor fan 35.

Next, in Step S7, the controller 50 performs the defrosting operation. The defrosting operation is performed by stopping the outdoor fan 55 while still running the compressor 13.

Then, in Step S8, after a predetermined period of time has passed after the controller 50 switches the refrigerant cycle to the cooling cycle by using the four-way valve 15, the controller 50 stops the indoor fan 35.

In Step S9, the controller 50 then determines whether or not a condition for causing the air conditioner 1 to end the defrosting operation is satisfied. When the controller 50 determines that the condition for causing the air conditioner 1 to end the defrosting operation is satisfied, the defrosting operation is ended: otherwise, the controller 50 continues the process of determination.

As described above, controlling the shift to the defrosting operation that includes the impulse noise masking control causes the impulse noise generated when the four-way valve 15 performs the switching action to be drowned out by the noise of the indoor fan 35. Therefore, the user can be prevented from feeling uncomfortable due to a strange noise.

In contrast, when the controller 50 proceeds to Step S14 after the determination in Step S4, in Step S14, the controller 50 stops the indoor fan 35 and the compressor 13 (see FIG. 7B).

Next, in Step S15, the controller 50 performs a pressure equalization operation while stopping the compressor 13 for a predetermined period of time (see FIG. 7B). The "pressure equalization operation" refers to an operation of reducing the differential pressure in the refrigerant circuit while continuing to run the outdoor fan 55 and sending air to the outdoor heat exchanger 17.

Then, in Step S16, the controller 50 switches the refrigerant cycle from the heating cycle to the cooling cycle by using the four-way valve 15 (see FIG. 7B). Because the pressure equalization operation is started in advance to reduce the differential pressure in the refrigerant circuit, the impulse noise decreases, and the user can be prevented from feeling uncomfortable due to a strange noise.

Next, in Step S17, the controller 50 ends the pressure equalization operation (see FIG. 7B).

Then, in Step S18, the controller 50 activates the compressor 13 to start the defrosting operation (see FIG. 7B). After that, the controller 50 jumps to Step S9.

Then, in Step S9, the controller 50 determines whether or not the condition for causing the air conditioner 1 to end the defrosting operation is satisfied. When the controller 50 determines that the condition for causing the air conditioner 1 to end the defrosting operation is satisfied, the defrosting operation ends: otherwise the controller 50 continues the process of determination.

As described above, after the controller 50 has determined that the condition for causing the air conditioner 1 to shift to the defrosting operation is satisfied, the controller 50 selects, depending on whether or not the indoor fan 35 is rotating at a high speed, either performing the impulse noise masking control to shift to the defrosting operation, or performing the pressure equalization operation to shift to the defrosting operation.

No matter if the former or the latter is selected, the user can be prevented from feeling uncomfortable due to a strange noise.

### (4) Features

### (4-1)

In the air conditioner 1, because the indoor fan 35 is running when the four-way valve 15 performs the switching action, the noise of the indoor fan 35 drowns out the impulse noise that occurs when the four-way valve 15 performs the switching action, and the user can be prevented from feeling uncomfortable due to a strange noise.

In addition, because there is no need to reduce the operating frequency of the compressor before shifting to the defrosting operation, a reduction in the heating operation ability can be prevented.

### (4-2)

In the air conditioner 1, the indoor fan 35 is configured to run when the four-way valve 15 performs the switching action. Therefore, there is no need to perform the pressure equalization operation of stopping the compressor 13 and reducing the differential pressure in the refrigerant circuit before the defrosting operation, which reduces the time taken to perform the pressure equalization control. As a result, the heating operation operating ratio (= net heating operation time/<net heating operation time + defrosting operation time>) increases.

### (4-3)

In the air conditioner 1, because the indoor fan 35 continues to run before and after the four-way valve 15 performs the switching action, the impulse noise can be reliably masked by the noise of the indoor fan 35. As a result, the impulse noise that occurs when the four-way valve 15 performs the switching action can be drowned out, and the user can be prevented from feeling uncomfortable due to a strange noise.

### (4-4)

In the air conditioner 1, as a method of preventing the user from noticing the impulse noise that occurs when the four-way valve 15 performs the switching action, it is possible to selectively use the impulse noise masking control and the pressure equalization operation based on the speed of the indoor fan 35 before the switching action. Therefore, compared to a conventional method of merely selecting the pressure equalization operation, there are more opportunities to increase the heating operation operating rate.

### (4-5)

In the air conditioner 1, the controller 50 reduces the operating frequency of the compressor 13 in advance when performing the impulse noise masking control while continuing to run the compressor 13, to thereby somewhat reduce the differential pressure in the refrigerant circuit. Therefore, the impulse noise that occurs when the four-way valve 15 performs the switching action also reduces by the amount the differential pressure is reduced, and the impulse noise can be reliably drowned out when the impulse noise is masked by the noise of the indoor fan 35.

### (5) Modification Example

In the above-described embodiment, whether to perform the impulse noise masking control to shift to the defrosting operation, or perform the pressure equalization operation to shift to the defrosting operation is selected depending on whether or not the speed of the indoor fan 35 is high.

However, both the pressure equalization operation and the impulse noise masking control may be performed. In this case, the pressure equalization operation causes the differential pressure in the refrigerant circuit to decrease, and hence the impulse noise that occurs when the four-way valve 15 performs the switching action is reduced. In addition, the noise of the indoor fan 35 can mask and reliably drown out the impulse noise, and the user can be prevented from feeling
uncomfortable due to a strange noise.

### REFERENCE SIGNS LIST

- 1: air conditioner
- 11: indoor heat exchanger
- 13: compressor
- 15: four-way valve
- 17: outdoor heat exchanger
- 19: expansion valve (expansion mechanism)
- 35: indoor fan
- 50: controller

## Claims

1. An air conditioner comprising a refrigerant circuit formed of a compressor (13), an outdoor heat exchanger (17), an expansion mechanism (19), and an indoor heat exchanger (11) connected to one another in the stated order, the air conditioner configured to perform a defrosting operation of melting frost that has adhered to the outdoor heat exchanger (17) by switching from a heating cycle in which the outdoor heat exchanger (17) functions as an evaporator to a cooling cycle in which the outdoor heat exchanger (17) functions as a condenser, the air conditioner comprising:
a four-way valve (15) configured to perform a switching action of switching between the heating cycle and the cooling cycle in the refrigerant circuit;
an indoor fan (35) configured to send air to the indoor heat exchanger (11); and
a controller (50) configured to control operations of the four-way valve (15) and operations of the indoor fan (35), the controller (50) being configured to perform a first control of putting the air conditioner into a state in which the indoor fan (35) is running when the four-way valve (15) performs the switching action, **characterised in that**
the controller (50) is further configured to perform a pressure equalization control of stopping the compressor (13) and reducing differential pressure in the refrigerant circuit before the defrosting operation, during which the air conditioner is put into a state in which the indoor fan (35) is running when the four-way valve (15) performs the switching action.

2. The air conditioner according to claim 1, wherein the controller (50) is configured to perform the first control while continuing to run the compressor (13).

3. The air conditioner according to claim 1 or 2, wherein
the controller (50) is configured to continue to run the indoor fan (35) for a period spanning from before the four-way valve (15) performs the switching action to until the switching action ends.

4. The air conditioner according to claim 1, wherein
the controller (50) is configured to perform the first control without stopping the compressor (13) when a speed of the indoor fan (35) before the four-way valve (15) performs the switching action is equal to or more than a predetermined speed, and is configured to perform the pressure equalization control of stopping the compressor (13) and the indoor fan (35), and reducing the differential pressure in the refrigerant circuit, when the speed of the indoor fan (35) is less than a predetermined speed before the four-way valve (15) performs the switching action.

5. The air conditioner according to claim 2, wherein
the controller (50) is configured to reduce an operating frequency of the compressor (13) before the four-way valve (15) performs the switching action.

## Patentansprüche

1. Klimaanlage, umfassend einen Kältemittelkreislauf, der aus einem Kompressor (13), einem Außenwärmetauscher (17), einem Expansionsmechanismus (19) und einem Innenraumwärmetauscher (11) gebildet ist, die miteinander in der genannten Reihenfolge verbunden sind, wobei die Klimaanlage konfiguriert ist, einen Abtaubetrieb zum Schmelzen von Frost, der an dem Außenwärmetauscher (17) haftet, durch Umschalten von einem Wärmzyklus, in dem der Außenwärmetauscher (17) als ein Verdampfer fungiert, in einen Kühlzyklus, in dem der Außenwärmetauscher (17) als ein Kondensator fungiert, auszuführen, die Klimaanlage umfassend:
ein Vierwegeventil (15), das konfiguriert ist, eine Schalthandlung zum Umschalten zwischen dem Wärmzyklus und dem Kühlzyklus im Kältemittelkreislauf auszuführen;
einen Innenraumlüfter (35), der konfiguriert ist, Luft an den Innenraumwärmetauscher (11) zu schicken; und
eine Steuerung (50), die konfiguriert ist, Betriebe des Vierwegeventils (15) und Betriebe des Innenraumlüfters (35) zu steuern, wobei die Steuerung (50) konfiguriert ist, eine erste Steuerung zum Versetzen der Klimaanlage in einen Zustand auszuführen, in dem der Innenraumlüfter (35) läuft, wenn das Vierwegeventil (15) die Schalthandlung ausführt, **dadurch gekennzeichnet, dass**
die Steuerung (50) weiter konfiguriert ist, eine Druckausgleichsteuerung zum Stoppen des Kompressors (13) und Verringern eines Differentialdrucks im Kältemittelkreislauf vor dem Abtaubetrieb auszuführen, während dessen die Klimaanlage in einen Zustand versetzt wird, in dem der Innenraumlüfter (35) läuft, wenn das Vierwegeventil (15) die Schalthandlung ausführt.

2. Klimaanlage nach Anspruch 1, wobei
die Steuerung (50) konfiguriert ist, die erste Steuerung auszuführen, während der Kompressor (13) weiterhin laufen gelassen wird.

3. Klimaanlage nach Anspruch 1 oder 2, wobei
die Steuerung (50) konfiguriert ist, den Innenraumlüfter (35) weiterhin für eine Dauer laufen zu lassen, die von bevor das Vierwegeventil (15) die Schalthandlung ausführt bis zum Ende der Schalthandlung reicht.

4. Klimaanlage nach Anspruch 1, wobei
die Steuerung (50) konfiguriert ist, die erste Steuerung auszuführen, ohne den Kompressor (13) zu stoppen, wenn eine Geschwindigkeit des Innenraumlüfters (35), bevor das Vierwegeventil (15) die Schalthandlung ausführt, gleich oder mehr als eine vorbestimmte Geschwindigkeit ist, und konfiguriert ist, die Druckausgleichssteuerung zum Stoppen des Kompressors (13) und des Innenraumlüfters (35) und Verringern des Differentialdrucks im Kältemittelkreislauf auszuführen, wenn die Geschwindigkeit des Innenraumlüfters (35) weniger als eine vorbestimmte Geschwindigkeit ist, bevor das Vierwegeventil (15) die Schalthandlung ausführt.

5. Klimaanlage nach Anspruch 2, wobei
die Steuerung (50) konfiguriert ist, eine Betriebsfrequenz des Kompressors (13) zu verringern, bevor das Vierwegeventil (15) die Schalthandlung ausführt.

## Revendications

1. Climatiseur comprenant un circuit de réfrigérant formé d'un compresseur (13), d'un échangeur de chaleur extérieur (17), d'un mécanisme de détente (19), et d'un échangeur de chaleur intérieur (11) raccordés les uns aux autres dans l'ordre cité, le climatiseur étant configuré pour réaliser une opération de dégivrage de fonte de givre qui a adhéré à l'échangeur de chaleur extérieur (17) par la commutation d'un cycle de chauffage dans lequel l'échangeur de chaleur extérieur (17) fonctionne comme un évaporateur à un cycle de refroidissement dans lequel l'échangeur de chaleur extérieur (17) fonctionne comme un condensateur, le climatiseur comprenant :
une soupape à quatre voies (15) configurée pour réaliser une action de commutation entre le cycle de chauffage et le cycle de refroidissement dans le circuit de réfrigérant ;
un ventilateur intérieur (35) configuré pour envoyer de l'air à l'échangeur de chaleur intérieur (11) ; et
un dispositif de commande (50) configuré pour commander des opérations de la soupape à quatre voies (15) et des opérations du ventilateur intérieur (35), le dispositif de commande (50) étant configuré pour réaliser une première commande de placement du climatiseur dans un état dans lequel le ventilateur intérieur (35) fonctionne lorsque la soupape à quatre voies (15) réalise l'action de commutation, **caractérisé en ce que**
le dispositif de commande (50) est en outre configuré pour réaliser une commande d'égalisation de pression d'arrêt du compresseur (13) et de réduction de la pression différentielle dans le circuit de réfrigérant avant l'opération de dégivrage, pendant laquelle le climatiseur est placé dans un état dans lequel le ventilateur intérieur (35) fonctionne lorsque la soupape à quatre voies (15) réalise l'action de commutation.

2. Climatiseur selon la revendication 1, dans lequel
le dispositif de commande (50) est configuré pour réaliser la première commande tout en continuant à faire fonctionner le compresseur (13).

3. Climatiseur selon la revendication 1 ou 2, dans lequel
le dispositif de commande (50) est configuré pour continuer à faire fonctionner le ventilateur intérieur (35) pour une période avant que la soupape à quatre voies (15) ne réalise l'action de commutation et jusqu'à la fin de l'action de commutation.

4. Climatiseur selon la revendication 1, dans lequel
le dispositif de commande (50) est configuré pour réaliser la première commande sans arrêter le compresseur (13) lorsqu'une vitesse du ventilateur intérieur (35) avant que la soupape à quatre voies (15) ne réalise l'action de commutation est égale ou supérieure à une vitesse prédéterminée, et est configuré pour réaliser la commande d'égalisation de pression d'arrêt du compresseur (13) et du ventilateur intérieur (35), et de réduction de la pression différentielle dans le circuit de réfrigérant, lorsque la vitesse du ventilateur intérieur (35) est inférieure à une vitesse prédéterminée avant que la soupape à quatre voies (15) ne réalise l'action de commutation.

5. Climatiseur selon la revendication 2, dans lequel
le dispositif de commande (50) est configuré pour réduire une fréquence opérationnelle du compresseur (13) avant que la soupape à quatre voies (15) ne réalise l'action de commutation.
